# EUROPÄISCHE PATENTSCHRIFT

(11) **EP 2 668 399 B1**
(45) Veröffentlichungstag und Bekanntmachung des Hinweises auf die Patenterteilung: **22.06.2016**
(21) Anmeldenummer: 12700786.2
(22) Anmeldetag: 19.01.2012
(51) Int. Cl.: F03D 80/80, F03D 13/20, H02H 7/06

(54) **TURM EINER WINDENERGIEANLAGE MIT STROMLEITMITTELN**
TOWER OF A WIND ENERGY INSTALLATION WITH CURRENT CONDUCTION MEANS
MÂT D'UNE ÉOLIENNE COMPRENANT DES MOYENS DE CONDUCTION ÉLECTRIQUES

(30) Priorität: 26.01.2011 DE 102011003208
(43) Veröffentlichungstag der Anmeldung: 04.12.2013
(73) Patentinhaber: Senvion GmbH, 22297 Hamburg (DE)
(72) Erfinder: SCHUBERT, Matthias, 24768 Rendsburg (DE)
(74) Vertreter: Grebner, Christian Georg Rudolf
(86) Internationale Anmeldenummer: PCT/EP2012/000232
(87) Internationale Veröffentlichungsnummer: WO 2012/100926

(56) Entgegenhaltungen:
- WO-A1-2007/134599
- US-A1- 2005 042 099
- US-A1- 2010 212 784

## Beschreibung

Die Erfindung betrifft einen Turm, insbesondere Rohrturm, einer Windenergieanlage mit einem Stromleitmittelsystem zum Übertragen von elektrischer Leistung von einem, vorzugsweise auf einem Turm angeordneten, Generator zu einem, vorzugsweise am Turmfuß ausgebildeten, Leistungsmodul. Ferner betrifft die Erfindung eine Windenergieanlage sowie ein Verfahren zum Betreiben einer Windenergieanlage.

Windenergieanlagen der Patentanmelderin sind unter der Bezeichnung 5M, MM92, MM82, MM70 sowie MD77 bekannt.

Moderne Windenergieanlagen weisen im Allgemeinen einen Turm auf, auf dem ein Maschinengehäuse oder eine Gondel mit einem Rotor aufgesetzt ist. Der Turm ist insbesondere als Stahlrohrturm ausgebildet und weist im Allgemeinen eine sich verjüngende Form auf.

Der Turm selbst besteht weiterhin aus in der Regel mehreren Stahlturmabschnitten, die optional aus vorgefertigten Mantelsegmenten zusammengesetzt werden.

In WO-A-2004/083633 sind ein Stahlturm einer Windkraftanlage sowie ein Verfahren zum Bauen eines großformatigen, zylindrischen oder konischen Turms einer Windkraftanlage beschrieben.

Weiterhin ist in WO-A-03/036084 eine Windenergieanlage offenbart, die einen aus mehreren Turmsegmenten aufgebauten Turm, einen im Bereich des Turmkopfes angeordneten Generator, ein im Bereich des Turmfußes angeordnetes Leistungsmodul und in den Turmsegmenten vormontierte Stromschienen zur Stromübertragung vom Generator zum Leistungsmodul aufweist.

Das elektrische Leistungsmodul der Windenergieanlage, das elektrische Einheiten wie Transformator, Schaltschränke, ggf. Wechselrichter, Mittelspannungsanlage und/oder Niederspannungsverteilung usw. umfasst, ist bei vielen bekannten Windenergieanlagen unterhalb der Generatorebene und häufig im Bereich des Turmfußes des Turmes der Windenergieanlage oder auch innerhalb des Maschinengehäuses am Turmkopf angeordnet. Um die elektrische Energie, die von dem im Bereich der Turmspitze innerhalb einer Gondel angeordneten Generator erzeugt wird, zum Leistungsmodul bzw. zum Netzanschluss zu übertragen, sind dabei Stromschienen vorgesehen, die zumeist innerhalb des Turmes verlaufen.

In WO-A-2007/134599 ist allgemein ein Erdungssystem für eine Windenergieanlage offenbart, wobei die Windenergieanlage mit einem Versorgungsnetz verbunden ist.

Außerdem ist in US-A-2005/042099 eine Windenergieanlage mit einem aus mehreren Turmsegmenten aufgebauten Turm beschrieben. Die Windenergieanlage ist mit einem im Bereich des Turmkopfes angeordneten Generator sowie mit einem im Bereich des Turmfusses angeordneten Leistungsmodul und mit Stromleitungsmitteln zur Stromübertragung vom Generator zum Leistungsmodul ausgebildet, wobei die Stromleitungsmittel segmentiert in den Turmsegmenten vormontiert sind.

Überdies ist in US-A-2010/212784 unter anderem ein Verfahren zum Einbetten eines Erdungsdrahts in eine Holzstange offenbart.

Ferner ist in DE-C-101 52 557 eine Windenergieanlage mit einem aus mehreren Turmsegmenten aufgebauten Turm, mit einem im Bereich des Turmkopfes angeordneten Generator und mit einem im Bereich des Turmfußes angeordneten Leistungsmodul und mit einem Stromleitungsmittel zur Stromübertragung vom Generator zum Leistungsmodul beschrieben.

Ausgehend von diesem Stand der Technik besteht die Aufgabe der Erfindung darin, eine Windenergieanlage bereitzustellen, die auf einfache und günstige Weise errichtet wird oder ist, wobei es möglich sein soll, dass die gesetzten Sicherheitsanforderungen beibehalten werden.

Gelöst wird diese Aufgabe durch einen Turm, insbesondere Rohrturm, einer Windenergieanlage mit einem Stromleitmittelsystem zum Übertragen von elektrischer Leistung von einem, vorzugsweise auf einem Turm angeordneten, Generator zu einem, vorzugsweise am Turmfuß ausgebildeten, Leistungsmodul, der dadurch weitergebildet wird, dass das Stromleitmittelsystem drei nebeneinander angeordnete Stromleiter aufweist und die drei Stromleiter in einem Gehäuse angeordnet sind, wobei das Gehäuse als ein Schutzleiter für die im Gehäuse angeordneten Stromleiter ausgebildet ist, wobei das Gehäuse in vorbestimmten Abständen unter Verwendung von Verbindungseinrichtungen mit der, vorzugsweise inneren, Turmwandung verbunden ist, wobei die Verbindungseinrichtungen elektrisch leitende Querschnitte aufweisen, wobei die Abstände der Verbindungseinrichtung in Längserstreckung des Turms und die Querschnitte der Verbindungseinrichtung zwischen Gehäuse und Turmwandung derart bemessen sind, dass bei Auftreten eines Fehlerfalls, wie z.B. Kurzschluss, der Spannungsabfall zwischen Türmwandung und Gehäuse eine vorbestimmte Berührungsspannung nicht übersteigt.

Die Erfindung beruht auf dem Gedanken, ein einfaches Stromleitmittelsystem unter Verwendung des Gehäuses als Schutzleiter für die Stromleiter, die auch als Stromleitmittel bezeichnet werden, auszubilden, das gegenüber den bisherigen bekannten Stromleitmittelsystemen in Windenergieanlagen ein verringertes Gewicht aufweist, da der Schutzleiter durch das Gehäuse bereitgestellt wird.

Durch die Verwendung des Gehäuses als Schutzleiter wird das Stromleitmittelsystem im Rohrturm der Windenergieanlage verbessert und vereinfacht, wobei insbesondere der Materialaufwand und damit die Kosten für die gesamte Windenergieanlage reduziert werden.

Insbesondere weist das Stromleitmittelsystem genau bzw. ausschließlich drei nebeneinander angeordnete Stromleiter im Innern des (Schutzleiter-)Gehäuses auf, wobei die genau drei Stromleiter vom als Schutzleiter ausgebildeten Gehäuse umgeben sind. Der Schutzleiter für die (genau) drei nebeneinander angeordneten Stromleiter weist ein elektrisch leitfähiges Gehäuse z.B. aus Stahl auf, in dem die den Strom leitenden Stromleiter angeordnet sind.

Darüber hinaus ist im Rahmen der Erfindung vorgesehen, dass bei Auftreten eines Fehlerfalles, z.B. elektrischer Kurzschluss, der Spannungsabfall zwischen der Turmwandung und dem Gehäuse eine vorbestimmte Berührungsspannung nicht übersteigt, wobei die Verbindungseinrichtungen zwischen dem Gehäuse im Inneren des Turms und der Turmwandung elektrisch leitend ausgebildet sind und die Leitungsquerschnitte der Verbindungseinrichtungen in Kombination mit den Abständen in Längsrichtung des Turms zwischen den Verbindungseinrichtungen derart ausgebildet bzw. dimensioniert sind, dass beispielsweise bei Auftreten eines Kurzschlusses die Berührungsspannung und damit der Spannungsabfall zwischen der Turmwandung und den als Schutzleiter ausgebildeten Gehäuse nicht 50 Volt übersteigt.

Hierdurch wird erreicht, dass auch bei einem eventuell auftretenden Kurzschluss Personen bei Berühren der Turmwandung keinen elektrischen gesundheitsgefährdenden Schlag erfahren. Insgesamt wird dadurch die Betriebssicherheit der Windenergieanlage auch bei einem Kurzschluss erhöht. Im Rahmen der Erfindung ist es ebenso in einer Ausgestaltung des Turms vorgesehen, dass die Berührungsspannung weniger als 40 oder 30 Volt beträgt, um Gesundheitsgefährdungen für Personen zu minimieren. Die Festlegung der Berührungsspannung erfolgt vorteilhaft unter Berücksichtigung der je nach Aufstellungsland gültigen nationalen und internationalen Normen.

Ein weiterer Vorteil ergibt sich durch die Verwendung des Gehäuses für die Stromleiter als Schutzleiter dadurch, dass das Gehäuse in seinen Abmessungen kleiner gebaut werden kann als bei der Verwendung von vier Stromleitern.

Demgegenüber ist im Stand der Technik vorgesehen, dass in einem abgeschirmten Gehäuse neben den drei notwendigen Stromleitern für die drei Phasen des Drehstroms zusätzlich ein vierter Stromleiter vorgesehen ist und dieser vierte, als Schutzleiter vorgesehene Stromleiter neben den drei für die Drehstromphasen vorgesehenen Stromleitern, insbesondere parallel, im Gehäuse verläuft oder angeordnet ist. Dieser zusätzliche vierte von dem Gehäuse umgebene Stromleiter wird gemäß dem Stand der Technik als Schutzleiter verwendet oder benutzt.

Gemäß der Erfindung wird die vom Generator erzeugte Leistung über die Stromleiter oder -mittel zum Turmfuß geleitet. Dabei werden beispielsweise die drei Phasen eines Drehstroms über die drei innerhalb des Gehäuses befindlichen Stromleiter geleitet, wobei ein Nullleiter bzw. Neutralleiter nicht erforderlich ist, da die Phasen symmetrisch ausgelastet werden und somit ein Nullleiter (Neutralleiter) keine Leistung überträgt. Die Funktion des Schutzleiters wird dabei gemäß der Erfindung durch das Gehäuse für die Stromleiter übernommen. Aufgrund der Impedanz des Gehäuses entstehen bei einem Kurzschlussfall (Fehlerfall) hohe magnetische Kräfte, die durch entsprechend dimensionierte Halterungen zur Befestigung der Stromleiter im Gehäuse sowie durch die entsprechend dimensionierten Verbindungseinrichtungen des Gehäuses im oder am Rohrturm aufgenommen werden.

Dabei werden die Abstände zwischen den Halterungen für die Stromleiter derart bestimmt, dass durch die Verformungen der Stromleiter keine Kurzschlüsse entstehen. Hierbei sind insbesondere Zwischenstücke bzw. Spacer aus Isolationsmaterial vorgesehen, die aufgrund der maximal auftretenden bzw. zulässigen Kurzschlussströme in vorbestimmten Abständen zwischen den Stromleitern und dem Gehäuse angeordnet sind.

Ein besonderer Vorteil des Stromleitmittelsystems mit den genau drei Stromleitern besteht darin, dass ein koaxialer Aufbau der Stromleiter in dem Gehäuse ermöglicht bzw. ausgebildet ist, indem beispielsweise ein Stromleiter im geometrischen Mittelpunkt des Gehäuses angeordnet ist und die beiden anderen Stromleiter symmetrisch daneben angeordnet sind, wodurch die magnetischen Kräfte signifikant reduziert sind oder werden.

Im Rahmen der Erfindung wird unter einem (elektrischen) Leistungsmodul einer Windenergieanlage eine elektrische Einrichtung beispielsweise ein Transformator und/oder wenigstens ein Schaltschrank und/oder ein Wechselrichter und/oder eine Mittelspannungsanlage und/oder eine Niederspannungsverteileinheit usw. verstanden. Hierbei kann die elektrische Einrichtung einzelne Einheiten oder eine Kombination von mehreren Einheiten umfassen.

Darüber hinaus weist das als Schutzleiter verwendete Gehäuse einen relativ großen elektrischen Widerstand auf, so dass im Falle eines Kurzschlusses (Fehlerfall) ein signifikant kleinerer Kurzschlussstrom als bei einem konventionellen Stromschienenpaket mit vier Stromleitern fließt. Aus diesem Grund wird die Schutzfunktion des Schutzschalters bevorzugt bei deutlich geringeren Strömen aktiviert bzw. spricht dieser an.

Ferner ist das im Querschnitt geschlossene Gehäuse für die ausschließlich drei Stromleiter aus Metall, insbesondere Stahlblech, gefertigt, wobei zu Wartungs- und Inspektionszwecken das Gehäuse über entsprechende abnehmbare Deckel verfügt. Dabei werden bzw. sind die Abmessungen der Deckel klein ausgebildet, wobei der (erforderliche) Isolationsabstand zwischen Gehäuse und den innenliegenden Stromleitern auch unter den durch die magnetischen Kräfte hervorgerufenen Verformungen sicher eingehalten wird bzw. ist.

Außerdem zeichnet sich eine Ausgestaltung des Turms dadurch aus, dass das Stromleitmittelsystem als Statorstromleitmittelsystem für den Statorstrom oder das Stromleitmittelsystem als Rotorstromleitmittelsystem ausgebildet ist und/oder dass ein Statorstromleitmittelsystem und ein Rotorstromleitmittelsystem im Turm angeordnet sind.

Vorzugsweise beträgt die Impedanz des unter Verwendung des Gehäuses für die Stromleiter ausgebildeten Schutzleitees weniger als das n-fache (n = 1, 2, 3, 4, 5; n ≤ 5) der Impedanz der innerhalb des Gehäuses angeordneten Stromleiter. Es hat sich als praxisgerecht gezeigt, dass Impedanz des Schutzleitergehäuses für die genau drei im Schutzleitergehäuse verlaufenden Stromleiter ausgebildeten. Schutzleiter um den Faktor 5 oder Faktor 4 geringer ist als die Impedanz der innerhalb des Gehäuses angeordneten Stromleiter. Dieser Bereich stellt einen guten und sinnvollen Kompromiss zwischen den realisierten oder realisierbaren Gehäuseabmessungen und den beherrschbaren magnetischen Kräften (z.B. bei einem Kurzschluss) dar.

Hierbei zeichnet sich eine bevorzugte Ausführungsform des Turms dadurch aus, dass außerhalb des Stromleitmittelsystems Stromkabel ausgebildet sind, wobei jeweils drei Stromkabel für je eine Phase eines Drehstroms vorgesehen sind, so dass ein Stromkabel jeweils eine Phase des Drehstroms leitet. Hierbei sind die außerhalb des mit einem Gehäuse ausgebildeten Stromleitmittelsystems verlaufenden oder angeordneten Stromkabel mit den im Inneren des Gehäuses des Stromleitmittelsystems angeordneten drei Stromleitern verbunden.

Außerdem ist es bevorzugt, wenn an einem, vorzugsweise oberen oder unteren, Ende des Stromleitmittelsystems oder an den beiden Enden des im Turm angeordneten Stromleitmittelsystems jeweils Kabeleinspeisekästen vorgesehen sind, so dass die Kabeleinspeisekästen mit den Stromkabeln verbunden sind, um sicher die im Generator erzeugte Leistung über die Stromleiter von der Gondel zum Turmfuß zu übertragen.

Der in den Kabelanschlusskästen ausgebildete Kabelanschluss und die Durchführung der Stromkabel aus den Kabelanschlusskästen ist so ausgeführt, dass eine Verlegung der Stromkabel als vorteilhafte Dreierbündelung ermöglicht ist.

Dabei ist vorgesehen, dass die drei Stromkabel außerhalb des erfindungsgemäßen Stromleitmittelsystems angeordnet sind und hierbei bevorzugt nach Art einer Dreiecksform im Querschnitt angeordnet sind, wobei hierdurch eine Reduzierung der magnetischen Kräfte zwischen den Stromkabeln erreicht oder ermöglicht wird.

Durch diese derartige Anordnung der Stromkabel werden Unsymmetrien oder Asymmetrien in der Stromaufteilung vorteilhaft vermieden bzw. auf ein Minimum verringert.

Vorzugsweise sind mehrere Stromleitmittelsysteme mit ausschließlich jeweils drei Stromleitern im als Schutzleiter ausgebildeten Gehäuse für die Stromleiter vorgesehen. Die ausschließlich drei, nebeneinander verlaufenden oder angeordneten Stromleiter sind dabei im Schutzleitergehäuse angeordnet und von diesem umgeben.

Außerdem wird die Aufgabe gelöst durch eine Windenergieanlage mit einem Turm, insbesondere Rohrturm, wobei die Windenergieanlage wie voranstehend beschrieben ausgebildet ist. Zur Vermeidung von Wiederholungen wird auf die obigen Ausführungen ausdrücklich verwiesen.

Darüber hinaus wird die Aufgabe gelöst, durch ein Verfahren zum Betreiben einer Windenergieanlage mit einem Turm, insbesondere Rohrturm, wobei der Turm wie voranstehend ausgeführt ausgebildet ist, wobei bei Auftreten eines Fehlerfalles bzw. Kurzschlusses der Kurzschlussstrom des Stromleitmittelsystems abgeleitet wird oder ist, wobei der Spannungsabfall zwischen der Turmwandung und dem Gehäuse maximal 50 Volt oder weniger (40 V oder 30 V) beträgt und damit eine vorbestimmte Berührungsspannung nicht übersteigt.

Zur Vermeidung von Wiederholungen wird auf die obigen Ausführungen der Ausgestaltungen des Turms ausdrücklich verwiesen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung einer Windenergieanlage;
- Fig. 2: schematisch eine Anordnung von Stromschienen im Rohrturm der Windenergieanlage im Ausschnitt;
- Fig. 3: schematisch einen Aufbau eines Stromschienenpakets mit drei Stromschienen und
- Fig. 4: schematisch eine Anordnung von Stromkabeln.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

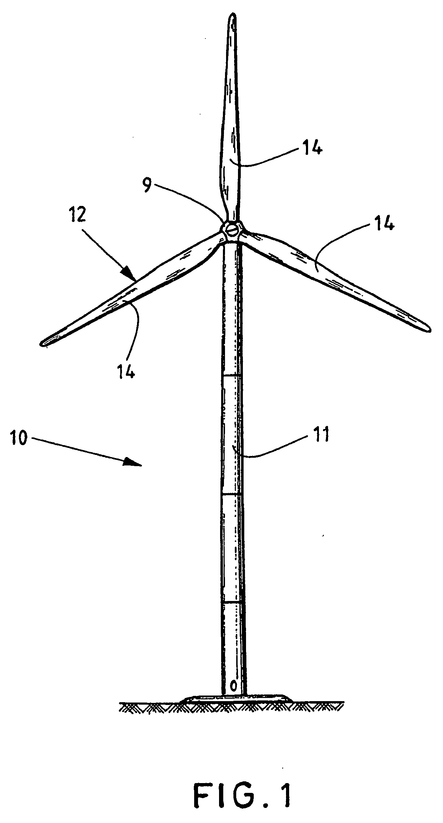

Fig. 1 zeigt eine schematische Darstellung einer Windenergieanlage 10. Die Windenergieanlage 10 weist einen vertikal ausgerichteten Turm 11 auf und einen Rotor 12, der drei Rotorblätter 14 umfasst, die auf einer Rotornabe 9 angebracht sind. Bei Windeinfall dreht der Rotor 12 in an sich bekannter Weise. Hierdurch kann Leistung von einem an den Rotor 12 bzw. an die Rotornabe 9 angeschlossenen Generator in einem Maschinenhaus auf dem Turm 11 erzeugt werden und in ein Verbrauchernetz abgegeben werden. Hierbei ist beispielsweise am Turmfuß ein entsprechendes Leistungsmodul angeordnet.

Der Turm 11 ist als Stahlrohrturm ausgebildet und besteht aus mehreren, miteinander verbundenen Rohrturmabschnitten. Die Rohrturmabschnitte werden auch als Turmschuss bezeichnet, so dass ein Rohrturm als mehrschüssiger Rohrturm ausgebildet ist.

Bei dem in Fig. 1 dargestellten Ausführungsbeispiel einer Windenergieanlage 10 besteht der Turm 11 aus mehreren Turmsegmenten, die untereinander im Wesentlichen denselben Aufbau haben. Vorzugsweise bestehen die Turmsegmente aus hohlzylindrischen Rohrstücken, die aus entsprechend geeignetem Stahl gefertigt sind, wobei jedes zylindrische Turmsegment sich von unten nach oben konisch verjüngen kann. Jedes der Turmsegmente weist eine durchgängige, geschlossene, hohlzylindrische Turmwandung auf, die sich vom unteren Flansch eines Turmsegments zu einem oberen Flansch des Turmsegments erstreckt, wobei die Flansche der Turmsegmente im Wesentlichen ringförmig ausgebildet sind und sich von der Turmwandung ausgehend nach innen in den Innenraum der Turmsegmente hinein erstrecken.

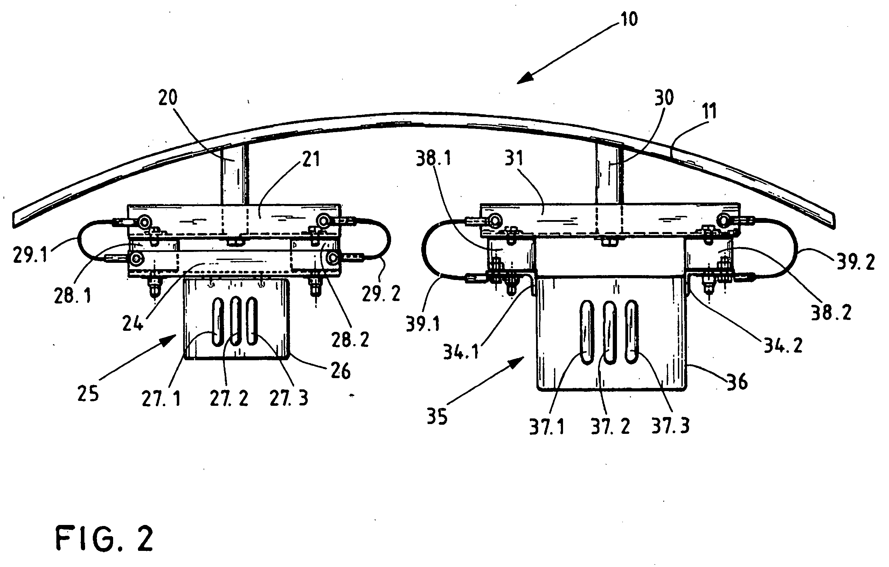

Fig. 2 zeigt schematisch im Ausschnitt eine Anordnung von Stromschienen in einem Rohrturm einer Windenergieanlage. Hierbei sind an der Innenseite eines Turmsegments des Turms 11 in Längsrichtung des Turms 11 bzw. des Turmsegments Bolzen 20, 30 in vorbestimmten Abständen angeschweißt, wobei unter Verwendung einer Reihe von Bolzen 20 bzw. einer Reihe von Bolzen 30 ein im Inneren angeordnetes Stromschienenpaket 25 bzw. 35 mit der Turmwandung verbunden ist. Das Stromschienenpaket 25 ist dabei als Rotorstromschienenleitsystem ausgebildet, während das Stromschienenpaket 35 als Statorstromleitmittelsystem ausgebildet ist. Die Anordnung ist hierbei beispielhaft zu verstehen und kann im Rahmen des Könnens eines Fachmanns auch vertauscht oder z.B. mit einer Turmaufstiegsleiter zwischen den Stromschienen ausgeführt werden oder sein.

An den in Längsrichtung des Turms 11, jeweils in vorbestimmten Abständen, angeordneten Bolzen 20, 30 sind die Bolzen 20, 30 jeweils mit einer Halterung 21 bzw. 31, beispielsweise in Form eines Querträgers oder dergleichen, verbunden.

Das als Rotorstromleitmittelsystem ausgebildete Stromschienenpaket 25 verfügt über ein Gehäuse 26, in dem drei Stromschienen 27.1, 27.2, 27.3 in Längsrichtung verlaufend angeordnet sind. Das Gehäuse 26 umgibt die Stromschienen 27.1 bis 27.3 und ist selbst elektrisch leitend.

Das Gehäuse 26 des Stromschienenpakets 25 ist dabei als Schutzleiter für die im Inneren des Gehäuses 26 angeordneten Stromschienen 27.1, 27.2, 27.3 ausgebildet. Das Gehäuse 26 ist auf seiner Rückseite mit einer Halterung 24 verbunden, wobei zwischen der Halterung 21 und der Halterung 24 randseitig jeweils elastische Halterungen 28.1, 28.2 angeordnet sind.

Um das Gehäuse 26, das als Schutzleiter für das Stromschienenpaket 25 ausgebildet ist, elektrisch leitend mit dem Turm bzw. dem Turmsegment zu verbinden, ist die Halterung 21 unter Verwendung von Leitungskabeln 29.1, 29.2 mit der rückseitigen Halterung 24 für das Gehäuse 26 elektrisch leitend verbunden.

Das als Statorstromleitmittelsystem ausgebildete Schienenpaket 35 weist ein elektrisch leitfähiges Gehäuse 36 aus, in dem drei Stromschienen 37.1, 37.2, 37.1 angeordnet sind. Das Gehäuse 36 ist an seinem hinteren bzw. rückwärtigen Ende über seitliche Halterungen 34.1, 34.2 und an den Halterungen 34.1, 34.2 daran angeordneten Leitungskabel 39.1, 39.2 mit dem Halter 31 elektrisch leitend verbunden. Auf der Rückseite des Gehäuses 36 ist zwischen den Halterungen 34.1, 34.2 und der turmseitigen Halterung 31 jeweils eine elastische Halterung 38.1, 38.2 vorgesehen.

Die Verwendung von zwei Stromschienenpaketen 25, 36 ist insbesondere bei einem doppelt gespeisten Asynchrongenerator einer Windenergieanlage bevorzugt, da über das Statorstromleitmittelsystem der Statorstrom abgeleitet wird und unter Verwendung eines weiteren Stromleitmittelsystems (Rotorstromleitmittelsystem) der Rotorstrom abgeleitet wird. Hierbei ist in einer bevorzugten Ausführungsform vorgesehen, dass die beiden Stromschienensysteme die Leistung auf verschiedenen Spannungsniveaus durch den Turm von dem Generator zum Turmfuß leiten.

Darüber hinaus ist es im Rahmen der Erfindung vorgesehen, dass bei Verwendung von Synchrongeneratoren die Leistung jeweils über ein einziges Stromschienensystem bzw. Stromleitmittelsystem durch den Turm, d.h. vom Generator zum Turmfuß, geführt wird.

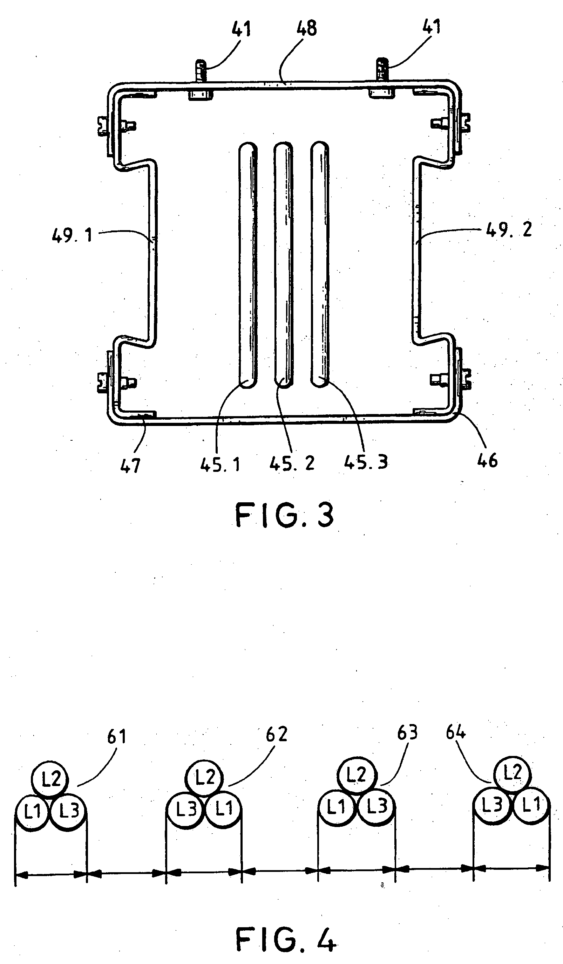

In Fig. 3 ist ein weiterer schematischer Aufbau eines Stromschienenpakets mit drei Stromschienen 45.1, 45.2, 45.3 im Querschnitt dargestellt, wobei die Stromschienen 45.1, 45.2, 45.3 in einem Gehäuse 46 angeordnet sind. Das Gehäuse 46 ist auf seiner Rückseite unter Verwendung von Befestigungsschrauben 41 und weiteren für den Fachmann bekannten Mitteln bzw. Einrichtungen mit der Turmwandung eines Turms elektrisch leitend verbunden.

Das Gehäuse 46 verfügt an seiner Vorderseite über einen abnehmbaren Gehäusedeckel 47, wobei zwischen dem Gehäusedeckel 47 und der Gehäuserückwand 48 mit Vertiefungen oder Einformungen ausgebildete Gehäuseseitenteile 49.1, 49.2 angeordnet sind. Dabei sind der Gehäusedeckel 47 und die Rückwand 48 mit den Gehäuseseitenteilen 49.1, 49.2 unter Verwendung von Schrauben miteinander verbunden. Die Gehäuseseitenteile 49.1, 49.2 sind wie der Gehäusedeckel 47 und die Rückwand 48 elektrisch leitend und/oder vorzugsweise aus Metall, z.B. aus Stahlblech, hergestellt.

Zwischen dem Gehäuse 46 und den im Inneren des als Schutzleitergehäuse ausgebildeten Gehäuses 46 angeordneten Stromteitern sind in einer weiteren Ausgestaltung eine Art Spacer, bzw. Zwischenteile ausgebildet, wobei diese vorzugsweise aus einem Isolationsmaterial gefertigt sind. Hierdurch werden unter Verwendung der zwischen den Stromleitern und der Innenseite des (Schutzleiter-)Gehäuses 46 vorgesehenen oder angeordneten Spacer oder Zwischenteile die Stromleiter sicher im Gehäuse 46 angeordnet und geführt, wodurch sich eine sichere Handhabung der Stromschienenpakete bei der Montage und Ausbildung eines Stromleitmittelsystems ergibt, das auch im Falle eines elektrischen Kurzschlusses die auftretenden, großen magnetischen Kräfte sicher überträgt.

In Fig. 4 ist schematisch im Querschnitt eine Anordnung von als Stromleiter verwendete Stromkabel, schematisch dargestellt, wobei die Stromkabel L1, L2, L3 in einer im Querschnitt dreieckförmigen Anordnung kompakt angeordnet sind. Hierbei werden oder sind die vier strangförmigen Anordnungen der Stromkabel L1, L2, L3 üblicherweise direkt im Turminnern auf der Turmwandung unter Verwendung von Befestigungsmitteln für die Stromkabel L1, L2, L3 angeordnet.

Wie aus Fig. 4 hervorgeht, sind jeweils drei Stromkabel L1, L2, L3 zu einem Kabelstrang 61, 62, 63, 64 miteinander gebündelt, wobei jedes der drei Kabel L1, L2, L3 eine Phase eines Drehstroms leitet. Hierbei sind die jeweils aus drei Stromkabeln L1, L2, L3 bestehenden Kabelstränge 61, 62, 63, 64 außerhalb von Kabeleinspeisekästen parallel nebeneinander angeordnet, wobei insbesondere die Dicke bzw. Breite eines Kabelstrangs 61, 62, 63, 64 bestehend aus drei Stromkabeln L1, L2, L3 dem seitlichen Abstand zwischen zwei Kabelsträngen 61, 62, 63, 64 entspricht.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 9: Rotornabe
- 10: Windenergieanlage
- 11: Turm
- 12: Rotor
- 14: Rotorblatt
- 20: Bolzen
- 21: Halterung
- 24: Halterung
- 25: Stromschienenpaket
- 26: Gehäuse
- 27.1, 27.2, 27.3: Stromschienen
- 28.1, 28.2: elastische Halterung
- 29.1, 29.2: Erdungskabel
- 30: Bolzen
- 31: Halter
- 34.1, 34.2: Halterung
- 35: Stromschienenpaket
- 36: Gehäuse
- 37.1., 37.2, 37.3: Stromschiene
- 38.1, 38.2: elastische Halterung
- 39.1, 39.2: Erdungskabel
- 41: Befestigungsschraube
- 45.1, 45.2, 45.3: Stromschiene
- 46: Gehäuse
- 47: Gehäusedeckel
- 48: Gehäuserückwand
- 49.1,49.2: Gehäuseseitenteil
- 61: Kabelstrang
- 62: Kabelstrang
- 63: Kabelstrang
- 64: Kabelstrang
- L1: Stromkabel
- L2: Stromkabel
- L3: Stromkabel

## Patentansprüche

1. Turm (11), insbesondere Rohrturm (11), einer Windenergieanlage (10) mit einem Stromleitmittelsystem (25, 35) zum Übertragen von elektrischer Leistung von einem, vorzugsweise auf dem Turm (11) angeordneten, Generator zu einem, vorzugsweise am Turmfuß ausgebildeten, Leistungsmodul, **dadurch gekennzeichnet, dass** das Stromleitmittelsystem (25, 35) drei nebeneinander angeordnete Stromleiter (27.1, 27.2, 37.3; 37.1, 37.2, 37.3; 45.1, 45.2, 45.3) aufweist und die drei Stromleiter (27.1, 27.2, 37.3; 37.1, 37.2, 37.3; 45.1, 45.2, 45.3) in einem Gehäuse (26, 36, 46) angeordnet sind, wobei das Gehäuse (26, 36, 46) als ein Schutzleiter für die im Gehäuse (26, 36, 46) angeordneten Stromleiter (27.1, 27.2, 37.3; 37.1, 37.2, 37.3; 45.1, 45.2, 45.3) ausgebildet ist, wobei das Gehäuse (26, 36, 46) in vorbestimmten Abständen unter Verwendung von Verbindungseinrichtungen mit der, vorzugsweise inneren, Turmwandung verbunden ist, wobei die Verbindungseinrichtungen elektrische, mit der Turmwandung leitende Querschnitte aufweisen, wobei die Abstände der Verbindungseinrichtungen in Längserstreckung des Turms (11) und die Querschnitte der Verbindungseinrichtungen zwischen Gehäuse (26, 36, 46) und Turmwandung derart bemessen sind, dass bei Auftreten eines Fehlerfalles der Spannungsabfall zwischen Turmwandung und Gehäuse (26, 36, 46) eine vorbestimmte Berührungsspannung nicht übersteigt.

2. Turm (11) nach Anspruch 1, **dadurch gekennzeichnet, dass** das Stromleitmittelsystem (25, 35) als Statorstromleitmittelsystem (35) für den Statorstrom oder das Stromleitmittelsystem (25, 35) als Rotorstromleitmittelsystem (25) ausgebildet ist und/oder dass ein Statorstromleitmittelsystem (35) und ein Rotorstromleitmittelsystem (25) im Turm (11) angeordnet sind.

3. Turm (11) nach Anspruch 1 oder 2, **dadurch gekennzeichnet, dass** die Impedanz des unter Verwendung des Gehäuses (26, 36, 46) für die Stromleiter (27.1, 27.2, 37.3; 37.1, 37.2, 37.3; 45.1, 45.2, 45.3) ausgebildeten Schutzleiter weniger als das n-fache (n = 1, 2, 3, 4, 5; n ≤ 5) der Impedanz der innerhalb des Gehäuses (26, 36, 46) angeordneten Stromleiter (27.1, 27.2, 37.3; 37.1, 37.2, 37.3; 45.1, 45.2, 45.3) beträgt.

4. Turm (11) nach einem der Ansprüche 1 bis 3, **dadurch gekennzeichnet, dass** außerhalb des Stromleitmittelsystems (25, 35) Stromkabel (L1, L2, L3) ausgebildet sind, wobei jeweils drei Stromkabel (L1, L2, L3) für je eine Phase eines Drehstroms vorgesehen sind, so dass ein Stromkabel (L1, L2, L3) jeweils eine Phase des Drehstroms leitet.

5. Turm (11) nach Anspruch 4, **dadurch gekennzeichnet, dass** an einem, vorzugsweise oberen oder unteren Ende oder an beiden Enden des im Turms (11) angeordneten Stromleitmittelsystems (25, 35) jeweils Kabeleinspeisekästen vorgesehen sind.

6. Turm (11) nach Anspruch 4 oder 5, **dadurch gekennzeichnet, dass** die drei Stromkabel (L1, L2, L3) außerhalb des Stromleitmittelsystems (25, 35) nach Art einer Dreiecksform im Querschnitt angeordnet sind.

7. Turm (11) nach einem der Ansprüche 1 bis 6, **dadurch gekennzeichnet, dass** die Stromleiter (27.1, 27.2, 37.3; 37.1, 37.2, 37.3; 45.1, 45.2, 45.3) koaxial im Gehäuse (26, 36, 46) angeordnet sind.

8. Windenergieanlage (10) mit einem Turm (11), insbesondere Rohrturm (11), nach einem der Ansprüche 1 bis 7.

9. Verfahren zum Betreiben einer Windenergieanlage (10), mit einem Turm (11) nach einem der Ansprüche 1 bis 7, wobei bei Auftreten eines Fehlerfalls der Kurzschlussstrom des Stromleitmittelsystems (25, 35) abgeleitet wird oder ist.

## Claims

1. A tower (11), in particular a tubular tower (11), of a wind energy installation (10) with a current conduction means system (25, 35) for transmitting electrical power from a generator, which is preferably arranged on top of the tower (11), to a power module, which is preferably formed at the tower base, **characterized in that** the current conduction means system (25, 35) has three electrical conductors arranged next to one another (27.1, 27.2, 37.3; 37.1, 37.2, 37.3; 45.1, 45.2, 45.3) and the three electrical conductors (27.1, 27.2, 37.3; 37.1, 37.2, 37.3; 45.1, 45.2, 45.3) are arranged in a housing (26, 36, 46), wherein the housing (26, 36, 46) is formed as a protective conductor for the electrical conductors (27.1, 27.2, 37.3; 37.1, 37.2, 37.3; 45.1, 45.2, 45.3) arranged in the housing (26, 36, 46), wherein the housing (26, 36, 46) is connected at predetermined distances to the, preferably inner, wall of the tower using connecting devices, wherein the connecting devices have electrical cross-sections conducting with the tower wall, wherein the distances between the connecting devices in the longitudinal extent of the tower (11) and the cross-sections of the connecting devices between housing (26, 36, 46) and tower wall are dimensioned such that in the event of a fault the voltage drop between tower wall and housing (26, 36, 46) does not exceed a predetermined touch voltage.

2. The tower (11) according to claim 1, **characterized in that** the current conduction means system (25, 35) is formed as a stator current conduction means system (35) for the stator current or that the current conduction means system (25, 35) is formed as a rotor current conduction means system (25) and/or that a stator current conduction means system (35) and a rotor current conduction means system (25) are arranged in the tower (11).

3. The tower (11) according to claim 1 or 2, **characterized in that** the impedance of the protective conductor formed using the housing (26, 36, 46) for the electrical conductors (27.1, 27.2, 37.3; 37.1, 37.2, 37.3; 45.1, 45.2, 45.3) is less than n-times (n = 1, 2, 3, 4, 5; n ≤ 5) the impedance of the electrical conductors (27.1, 27.2, 37.3; 37.1, 37.2, 37.3; 45.1, 45.2, 45.3) arranged inside the housing (26, 36, 46).

4. The tower (11) according to one of claims 1 to 3, **characterized in that** electrical cables (L1, L2, L3) are formed outside the current conduction means system (25, 35), wherein three electrical cables (L1, L2, L3) are provided for each single phase of a three-phase alternating current, so that one electrical cable (L1, L2, L3) conducts each single phase of the three-phase alternating current.

5. The tower (11) according to claim 4, **characterized in that** cable feeder boxes are provided at one, preferably upper or lower, end or at both ends of the current conduction means system (25, 35) arranged in the tower (11).

6. The tower (11) according to claim 4 or 5, **characterized in that** the three electrical cables (L1, L2, L3) are arranged outside the current conduction means system (25, 35), in a triangular shape in the cross-section.

7. The tower (11) according to one of claims 1 to 6, **characterized in that** the electrical conductors (27.1, 27.2, 37.3; 37.1, 37.2, 37.3; 45.1, 45.2, 45.3) are arranged coaxially in the housing (26, 36, 46).

8. A wind energy installation (10) with a tower (11), in particular a tubular tower (11), according to one of claims 1 to 7.

9. A method for operating a wind energy installation (10) with a tower (11) according to one of claims 1 to 7, wherein during the occurrence of a fault the short-circuit current of the current conduction means system (25, 35) is or has been discharged.

## Revendications

1. Mât (11), en particulier mât tubulaire (11), d'une éolienne (10) comprenant un système (25, 35) formant moyen de conduction électrique pour transporter de l'énergie électrique à partir d'un générateur, de préférence disposé sur le mât (11), vers un module de puissance situé de préférence à la base du mât, **caractérisé en ce que** le système (25, 35) formant moyen de conduction électrique comprend trois conducteurs électriques (27.1, 27.2, 37.3 ; 37.1, 37.2, 37.3 ; 45.1, 45.2, 45.3) disposés les uns à côté des autres, et **en ce que** les trois conducteurs (27.1, 27.2, 37.3 ; 37.1, 37.2, 37.3 ; 45.1, 45.2, 45.3) sont disposés dans un boîtier (26, 36, 46), le boîtier (26, 36, 46) formant un conducteur de protection pour les conducteurs électriques (27.1, 27.2, 37.3 ; 37.1, 37.2, 37.3 ; 45.1, 45.2, 45.3) disposés dans le boîtier (26, 36, 46), le boîtier (26, 36, 46) étant relié à la paroi, de préférence intérieure, du mât sur des distances prédéterminées en utilisant des moyens de liaison, les moyens de liaison présentant des sections transversales électriquement conductrices avec la paroi du mât, les distances entre les moyens de liaison dans la direction longitudinale du mât (11) et les sections transversales des dispositifs de liaison entre le boîtier (26, 36, 46) et la paroi du mât étant dimensionnés de telle sorte qu'en cas d'une défaillance, une chute de tension entre la paroi du mât et le boîtier (26, 36, 46) ne dépasse pas une tension de contact prédéterminée.

2. Mât (11) selon la revendication 1, **caractérisé en ce que** le système (25, 35) formant moyen de conduction électrique est formé par un système (35) formant moyen de conduction électrique de courant de stator, ou le système (25, 35) formant moyen de conduction électrique est formé par un système (25) formant moyen de conduction électrique de courant de rotor, et / ou **en ce qu'**un système (35) formant moyen de conduction électrique de courant de stator et un système (25) formant moyen de conduction électrique de courant de rotor sont disposés dans le mât (11).

3. Mât (11) selon la revendication 1 ou la revendication 2, **caractérisé en ce que** l'impédance du conducteur de protection formé pour les conducteurs électriques (27.1, 27.2, 37.3 ; 37.1, 37.2, 37.3 ; 45.1, 45.2, 45.3) en utilisant le boîtier (26, 36, 46), est inférieure à n fois (n = 1, 2, 3, 4, 5; n≤5) l'impédance des conducteurs électriques (27.1, 27.2, 37.3 ; 37.1, 37.2, 37.3 ; 45.1, 45.2, 45.3) disposés à l'intérieur du boîtier (26, 36, 46).

4. Mât (11) selon l'une quelconque des revendications 1 à 3, **caractérisé en ce que** des câbles électriques (L1, L2, L3) sont aménagés en dehors du système (25, 35) formant moyen de conduction électrique, chacun des trois câbles électriques électrique (L1, L2, L3) étant prévu pour une phase d'un courant triphasé, de telle sorte que chacun des câbles électriques (L1, L2, L3) conduit une phase du courant triphasé.

5. Mât (11) selon la revendication 4, **caractérisé en ce que** des boîtes d'alimentation en câble sont agencées à chaque extrémité, de préférence supérieure ou inférieure, ou sont agencées aux deux extrémités, du système (25, 35) formant moyen de conduction électrique qui est disposé dans le mât (11).

6. Mât (11) selon la revendication 4 ou la revendication 5, **caractérisé en ce que** les trois câbles électriques (L1, L2, L3) sont disposés selon une forme triangulaire en coupe transversale et sont en dehors du système (25, 35) formant moyen de conduction électrique.

7. Mât (11) selon l'une quelconque des revendications 1 à 6, **caractérisé en ce que** les conducteurs électriques (27.1, 27.2, 37.3 ; 37.1, 37.2, 37.3; 45.1, 45.2, 45.3) sont disposés de façon coaxiale dans le boîtier (26, 36, 46).

8. Eolienne (10) ayant un mât (11), en particulier un mât tubulaire (11), selon l'une quelconque des revendications 1 à 7.

9. Un procédé pour faire fonctionner une éolienne (10), avec un mât (11) selon l'une quelconque des revendications 1 à 7, par lequel, en cas de survenance d'une défaillance, le courant de court-circuit du système (25, 35) formant moyen de conduction électrique est dérivé ou est apte à être dérivé.
